# EUROPEAN PATENT APPLICATION

(11) **EP 0 626 394 A1**
(43) Date of publication of application: **30.11.1994**
(21) Application number: 94201443.2
(22) Date of filing: 20.05.1994
(51) Int. Cl.: C08F 6/00, C08F 6/28

(54) **Process for purification of a polymer**

(30) Priority: 25.05.1993 BE 9300533
(71) Applicant: DSM N.V., NL-6411 TE Heerlen (NL)
(72) Inventor: Van Roosmalen, Lodevicus, NL-6121 ZD Born (L) (NL); Mutsers, Stanislaus Martinus Petrus, NL-6166 EH Geleen (NL); Linders, Jozef Alfons Johan, NL-5615 PM Eindhoven (NL)

(57) **Abstract**

The invention relates to a process for purification of a polymer comprising passing a gas through a dry mass of the powdered polymer, characterized in that the mass of the powdered polymer is located on a body that is permeable to the gas and impermeable to the powdered polymer particles, a higher gas pressure being maintained on the side of the body where the mass of the powdered polymer is present than on the other side of the body.

## Description

The invention relates to a process for purification of a polymer comprising passing a gas through a dry mass of the powdered polymer.

After being polymerized, such a polymer, which may be formed by, for instance, emulsion polymerization or solution polymerization, contains one or more low-molecular-weight impurities such as residual monomer or a low-boiling solvent. These low-molecular-weight impurities may, during processing or when the polymer is used in an article, for instance, diffuse from the polymer and enter the environment. Many impurities are toxic or carcinogenic or have some other undesirable effect on the environment. Thus, it is most important to reduce the amount of impurity in the polymer as much as possible. This applies to, for instance, polymers or copolymers that are applied in the foodstuff industry as, for instance, packaging material.
In many polymerization processes the polymer is either brought into powder form during or after the polymerization process or is already in powder form because of the nature of the polymerization process proper. Powder form is understood to mean a mass of particles with a weight average particle size of from 0.03 mm to about 1 mm. The polymer particles may have pores as in the case of, for instance, polymer crumb obtained after coagulation of a latex.
The impurity then resides in the matrix of the polymer, of which the powder particles of the powdered polymer are made up. The impurity is difficult to remove from this matrix.
In some cases, after polymerizing, the polymer mass may in addition contain an amount of liquid used as an auxiliary agent in the polymerization process. This is the case with, for instance, polymers obtained in an emulsion polymerization process in which water is used. This amount of liquid is removed in a simple manner ahead of the purification step of the present invention by, for instance, centrifuging or by using a fluidized bed. The amount of liquid is readily removed, since the liquid is located between the powder particles of the powdered polymer, not in the matrix of the polymer of which the powder particles of the powdered polymer are made up. Accordingly, dry polymer mass in powder form is understood to mean such a mass having a liquid content of less than 2 per cent by weight relative to the total weight of the polymer mass in powder form.

A purification process for a polymer comprising passing a gas through a mass of the powdered polymer is disclosed in GB-A-1507338. This recites a process wherein a mass of the powdered polymer is treated with a gas, the gas and the mass of the polymer in powder form being passed countercurrently through a plurality of fluidized beds. The gas, flowing against gravity, contacts the polymer particles of the mass of the powdered polymer that are fluidized by the flowing gas, the impurities diffusing from the powder particles and mixing with the flowing gas, whereupon they are discharged together with the gas.

The disadvantage of the process known in the art is that the stripping efficiency is low. Stripping efficiency is understood to mean the percentage by weight of low-molecular-weight impurity that can be removed per m³ and per kg of polymer. The low stripping efficiency necessitates a relatively large amount of gas in the known process for reducing the impurity content of the mass of the powdered polymer to the desired low value. This relatively large amount of impurity-containing gas needs to be discharged and, also, the impurity needs to be separated off from the gas.
This requires complex and costly installations.

The invention aims to provide a process that does not have this disadvantage.

This is achieved in that in the process of the invention the mass of the powdered polymer is located on a body that is permeable to the gas and impermeable to the powdered polymer particles, a higher gas pressure being maintained on the side of the body where the mass of the powdered polymer is present than on the other side of the body. In this way, a gas stream develops through the mass of the powdered polymer towards the gas permeable body.

Surprisingly, a markedly higher stripping efficiency is achieved in the process of the invention than in the process known in the art.

An added advantage of the process of the invention is the fact that it is not now possible for powder particles to be extracted from the mass of the powdered polymer and carried off by the flowing gas, inasmuch as the mass of the powdered polymer is pressed onto the body by the pressure difference applied across the body. In the process known in the art it is especially the smaller powder particles that are extracted from the mass and carried off by the gas.

Another advantage of the process of the invention is that the particle size distribution of the powdered polymer does not affect, or hardly affects, the stripping efficiency whilst in the process known in the art the stripping efficiency decreases appreciably with wider particle size distributions of the powdered polymer.

The process of the invention is preferably characterized in that the particle size distribution of the powdered polymer meets at least one of the requirements that (D90-D50)/D50 > 3 and (D50-D10)/D10 > 3. Here, the powder particle sizes D90, D50 and D10 are characteristic of the particle size distribution. For D90 (and 50 and D10, respectively) it holds that 90 (and 50 and 10, respectively) per cent by weight of the powder consists of particles that are smaller than or equal to D90 (and D50 and D10, respectively). D10, D50 and D90 are measured in mm.

A gas pressure difference can be maintained across the body in many different manners. A gas pressure higher than the atmospheric pressure, for instance, may be applied on the side of the body where the mass of the powdered polymer is present - hereafter referred to as the polymer side - whilst the gas pressure on the other side of the body is chosen to be equal to the atmospheric pressure. Alternatively, a superatmospheric pressure may be applied on the polymer side while at the same time applying a vacuum on the other side. Vacuum is understood to mean any pressure lower than the atmospheric pressure. When a superatmospheric pressure is applied, there should be provided a closed space into which the powdered polymer can be fed. To this end, extra provisions should be made for feeding and discharging the powdered polymer and extra provisions should be made for preventing powdered polymer particles from being blown out of the space in which a gas pressure is maintained, into the environment.

Therefore, it is preferred for the gas pressure on the polymer side to be chosen equal to the atmospheric pressure and for a vacuum to be applied on the other side. The use of a vacuum is advantageous in that no extra provisions need be made, apart from provisions to maintain a vacuum.

A possible embodiment of the body of the process of the invention which is permeable to the gas and impermeable to the particles of the powdered polymer mass is a screen whose pore diameter is chosen to be smaller than the smallest particle of the powdered polymer mass. Alternatively, the body may be fashioned from a porous material such as porous cloth or filter paper.

It is highly advantageous to choose an embodiment of the body that readily permits of a continuous feed and discharge of the powdered polymer mass.

A continuous feed and discharge of the powdered polymer mass is achieved in a simple manner in that in the process of the invention a vacuum belt filter is used. Vacuum belt filter is understood to mean a device comprising an endless belt running between two pulleys and means for creating a vacuum on one side of the belt. Vacuum belt filters are described in for instance "Chemical Engineers Handbook" (Perry, published by McGraw-Hill, Chapter 20) and are used for solid-liquid separation (especially drying).

Surprisingly, in the process according to the invention, such an apparatus is found to be eminently suitable for the process for purification of a polymer. In the process according to the invention the body is then the belt of the vacuum belt filter.

In the process according to the invention, a styrene monomer units-containing copolymer is preferably used as polymer.

The styrene monomer units-containing copolymers that can be purified by the method according to the invention are for instance thermoplastic copolymers of styrene containing unsaturated comonomers such as ethylene, propylene, butenes, butadiene, isoprene, alkylacrylate, alkylmethacrylate, acrylonitrile, methacrylonitrile, maleic anhydride and acrylic acid. The copolymer may be a graft copolymer or a block copolymer or a copolymer of the shell-core type. Blends of styrene-containing copolymers with or without minor percentages, say, less than 10 per cent relative to the total weight, of a different, non-styrene-containing copolymer may also be applied.

A possible graft copolymer that may be applied in the process of the invention is a graft copolymer of styrene, a vinylcyanide and optionally a third monomer on a rubber. Suitable styrene monomer units in the copolymer are chosen from for instance the group comprising styrene, α-methylstyrene, o-, m- or p-vinyltoluene, vinylnaphthalene, dimethylstyrene, t-butylstyrene and halogenated styrene derivatives such as chlorostyrene or bromostyrene. It is preferred for the vinyl aromatic compound to be styrene and/or α-methylstyrene. Vinylcyanide compounds that may be suitably used are chosen from the group comprising acrylonitrile and cyanoalkylene compounds containing from 4 to 7 carbon atoms, such as methacrylonitrile. Preferably, the vinylcyanide compound applied is acrylonitrile and/or methacrylonitrile. Third monomers that may suitably be used are chosen from for instance the group of (meth)acrylates such as for instance methylmethacrylate and ethylacrylate, α,β-unsaturated dicarboxylic acids, α,β-unsaturated dicarboxylic anhydrides such as for instance maleic anhydride and imide derivatives, whether or not substituted, thereof, such as for instance maleimide and N-phenylmaleimide.

The rubber applied in the copolymer may be chosen from the rubbers that are known in the art. These rubbers generally have a glass transition temperature below -10°C. Rubbers that may be suitably used are chosen from for instance the group of butadiene rubbers and ethylene-propylene copolymers, which optionally may contain a third copolymerizable diene monomer such as for instance 1,4-hexadiene, dicyclopentadiene, methylene norbornene, ethylidene norbornene and tetrahydroindene. Butadiene copolymers with a butadiene content of 60-90 wt.% are preferred. In the method of the invention a graft copolymer is preferably chosen from the group of acrylonitrile-styrene-butadiene (ABS), acrylonitrile-styrene-acrylate (ASA) and an ethylene-propylene-diene rubber which has been polymerized with styrene and acrylonitrile (AES). Most preferably, the copolymer is an acrylonitrile-styrene-butadiene (ABS) copolymer.

The invention is further elucidated by the examples below, without being limited thereto.

### Examples and comparative experiments

### Examples I to V

An amount of ABS copolymer in powder form, type Ronfalin(TM) TZ 236 from DSM of the Netherlands, was applied to a grid located in a double-wall glass vessel (diameter 30 cm). A type PES 7450 polyester filter cloth supplied by Pannevis of the Netherlands was applied to the grid before the polymer powder was applied. A compressed air line was connected to the vessel at the top side. The compressed air was brought to the desired stripping temperature by means of a steam heater. The other side of the vessel was connected to a vacuum pump. The polymer powder to be purified was brought to the desired stripping temperature before it was applied in the stripping vessel. The initial and final styrene contents of the copolymer were determined using a gas chromatograph. The parameter settings were as follows:

| Example | I | II | III | IV | V |
|---|---|---|---|---|---|
| Stripping temperature (°C) | 81 | 70 | 78 | 78 | 76 |
| Polymer mass (kg) | 2.9 | 9.3 | 3.5 | 3.4 | 9.7 |
| Air flow (m³/min) | 0.22 | 0.12 | 0.21 | 0.20 | 0.08 |
| Stripping time (min) | 12 | 54 | 24 | 36 | 37 |
| Initial styrene content (wt.%) | 0.33 | 0.33 | 0.33 | 0.33 | 0.32 |

The particle size distribution of the powder was kept constant in all cases: D10, D50 and D90 were 0.04 mm, 0.25 mm and 1.15 mm, respectively. (D90-D50)/D50 = 3.6 and (D50-D10)/D10 = 5.25 were calculated from these figures.

### Comparative experiments A to D

An amount of ABS copolymer in powder form, type Ronfalin(TM) TZ 236 from DSM of the Netherlands, was applied in a fluidized bed installation. The fluidized bed installation consisted of a plastic cylindrical column (diameter 0.2 m) widening at the top. A standard sintered bottom plate (pressure drop 0.01 bar) was installed at the underside. Preheated air was pumped to the underside of the fluidized bed installation. Before being applied in the fluidized bed installation, the polymer powder to be purified was brought to the desired stripping temperature. The initial and final styrene contents of the copolymer were determined using a gas chromatograph. The parameter settings were as follows:

| Example | A | B | C | D |
|---|---|---|---|---|
| Stripping temperature (°C) | 80 | 81 | 70 | 78 |
| Polymer mass (kg) | 2.8 | 2.8 | 4.2 | 4.6 |
| Air flow (m³/min) | 0.87 | 0.58 | 0.29 | 0.29 |
| Stripping time (min) | 12 | 15 | 60 | 45 |
| Initial styrene content (wt.%) | 0.32 | 0.27 | 0.33 | 0.28 |

The results are summarized in table 1.

**TABLE 1**

| (Stripping efficiency) | | | |
|---|---|---|---|
| Example | Reduction in styrene (wt.%) | Required air volume per kg polymer powder (m³/kg) | Stripping efficiency (wt.%.kg/m³) |
| I | 0.22 | 0.9 | 2.44 |
| II | 0.19 | 0.7 | 0.271 |
| III | 0.26 | 1.4 | 0.186 |
| IV | 0.31 | 2.1 | 0.148 |
| V | 0.14 | 0.3 | 0.467 |
| A | 0.21 | 3.7 | 0.057 |
| B | 0.18 | 3.1 | 0.058 |
| C | 0.22 | 4.1 | 0.054 |
| D | 0.22 | 4.6 | 0.048 |

From all examples it appears that, on average, the process according to the invention requires a third to a fifth of the amount of air needed in the known fluidized bed method per kg of copolymer to be purified for removing the same amount of styrene from the copolymer.

## Claims

1. Process for purification of a polymer comprising passing a gas through a dry mass of the powdered polymer, characterized in that the mass of the powdered polymer is located on a body that is permeable to the gas and impermeable to the powdered polymer particles, a higher gas pressure being maintained on the side of the body where the mass of the powdered polymer is present than on the other side of the body.

2. Process according to claim 1, characterized in that the particle size distribution of the powdered polymer meets at least one of the requirements that (D90-D50)/D50 > 3 and (D50-D10)/D10 > 3.

3. Process according to either of claims 1 and 2, characterized in that the gas pressure on the side of the body where the mass of the powdered polymer is located is equal to the atmospheric pressure and the gas pressure on the other side of the body is lower than the atmospheric pressure.

4. Process according to any one of claims 1-3, characterized in that a vacuum belt filter is used.

5. Process according to any one of claims 1 - 4, characterized in that the polymer is a styrene monomer units-containing copolymer.

6. Process according to claim 5, characterized in that the styrene monomer units-containing copolymer is an acrylonitrile/butadiene/styrene copolymer.

7. Process as substantially described in the preamble and/or the examples.

8. Article wholly or partially manufactured from a polymer obtained by the process according to any one of the preceding claims.
